# EUROPÄISCHE PATENTSCHRIFT

(11) **EP 2 583 471 B1**
(45) Veröffentlichungstag und Bekanntmachung des Hinweises auf die Patenterteilung: **07.08.2019**
(21) Anmeldenummer: 11738636.7
(22) Anmeldetag: 15.06.2011
(51) Int. Cl.: H04Q 9/04, G01D 21/00

(54) **VERFAHREN ZUR SYNCHRONISATION VON SENSOREN**
METHOD FOR SYNCHRONIZING SENSORS
PROCÉDÉ DE SYNCHRONISATION DE CAPTEURS

(30) Priorität: 15.06.2010 DE 102010030132
(43) Veröffentlichungstag der Anmeldung: 24.04.2013
(73) Patentinhaber: Continental Teves AG & Co. OHG, 60488 Frankfurt am Main (DE)
(72) Erfinder: JÖCKEL, Wolfgang, 36129 Gersfeld (DE); SIMON, Otmar, 35415 Pohlheim/Holzheim (DE)
(86) Internationale Anmeldenummer: PCT/EP2011/059925
(87) Internationale Veröffentlichungsnummer: WO 2011/157744

(56) Entgegenhaltungen:
- DE-A1-102009 006 770
- DE-C1- 19 653 291
- US-B1- 6 560 279

## Beschreibung

Die Erfindung betrifft ein Verfahren zur Synchronisation von Sensoren gemäß Oberbegriff von Anspruch 1, eine Sensoranordnung gemäß Oberbegriff von Anspruch 13 sowie die Verwendung der Sensoranordnung in Kraftfahrzeugen.

Die Vernetzung von Sensoren im Kraftfahrzeug erfordert häufig die relativ präzise zeitliche Zuordnung von Messwertaufnahme und Messwertausgabe damit die Messwerte verschiedener Sensoren zeitlich in Zusammenhang gesetzt werden können. Eine bekannte Methode besteht darin, die Sensoren gezielt durch ein Triggersignal zur Messwertaufnahme zu stimulieren und dann die Daten synchronisiert auszulesen. Die Synchronisation erfolgt üblicherweise über Chip-Select-Signale, Datenworte, Digitales Synchronisations- Signal, oder simple Spannungspulse.

Ein Anforderungsschwerpunkt bei allen Anwendungen im Fahrzeug, ist die Robustheit und Störsicherheit der Signale. Hierbei gibt es wesentliche Unterschiede, ob die Sensoren auf einer Leiterplatte zusammengefasst sind, oder ob es sich um im Fahrzeug verteilte Sensoren, sogenannte Trabanten, handelt. Bei vielen Trabanten, gerade im Airbag Bereich, hat sich die Übertragung der Daten über eine 2-Draht-Stromschnittstelle durchgesetzt. Die Zuleitungen des Sensors dienen dabei häufig sowohl der Spannungsversorgung, als auch der bidirektionalen Datenübertragung.

Druckschrift WO 2008/022968 A2 beschreibt einen aktiven Sensor mit Betriebsmodus-Umschaltung, wobei die Umschaltung des Betriebsmodus durch Umpolen der Versorgungsspannung erfolgt.

Der Erfindung liegt die Aufgabe zu Grunde, ein Verfahren zur Synchronisation von Sensoren sowie eine Sensoranordnung vorzuschlagen, die eine relativ präzise Synchronisation der Datenübertragung zumindest von einem Sensor an eine elektronische Kontrolleinheit ermöglicht, wobei die Sensoranordnung relativ kostengünstig ausgebildet sein kann bzw. ist.

Diese Aufgabe wird erfindungsgemäß gelöst durch das Verfahren gemäß Anspruch 1 sowie durch die Sensoranordnung gemäß Anspruch 13.

Das Verfahren ermöglicht insbesondere eine relativ hohe Störfestigkeit der Synchronisation.

Das Synchronisationssignal ist vorzugsweise als Datenanforderungssignal ausgebildet bzw. dient vorzugsweise als solches.

Das Datensignal des Sensors umfasst vorzugsweise einen oder mehrere Impulse.

Bevorzugt ist das Datensignal des Sensors als eingeprägtes Stromsignal ausgebildet.

Es ist bevorzugt, dass die elektronische Kontrolleinheit zumindest ein spannungscodiertes Datensignal nach einem Synchronisationssignal bzw. zwischen zwei Synchronisationssignalen an den Sensor überträgt, insbesondere in einem dritten Datenübertragungsmodus. Dabei ist das mindestens eine Synchronisationssignal impulsförmig ausgebildet und das Datensignal umfasst ebenfalls ein oder mehrere Spannungsimpulse, besonders bevorzugt geringerer Amplitude als das Synchronisationssignal, wobei diese Spannungsimpulse des Datensignals keine wechselnde Polarität aufweisen. Mittels solch eines spannungscodierten Datensignals überträgt die elektronische Kontrolleinheit beispielsweise Kalibrierdaten und/oder Statusbefehle an den Sensor. Dieses spannungscodierte Datensignal wird zweckmäßigerweise mittels des Spannungsmodulators in der elektronischen Kontrolleinheit erzeugt.

Das Datensignal des Sensors umfasst vorzugsweise Statusdaten und/oder Messdaten, insbesondere je nach Art des zuvor vom Sensor empfangenen Synchronisationssignals.

Der Sensor ist vorzugsweise durch genau zwei Leitungen mit der elektronischen Kontrolleinheit verbunden, insbesondere durch zwei elektrische Verbindungsleitungen.

Zwischen elektronischer Kontrolleinheit und Sensor wird bevorzugt bidirektional Information übertragen und zwar vom Sensor zur elektronischen Kontrolleinheit, auch ECU abgekürzt, per Datensignal und von der ECU zum Sensor per Synchronisationssignal.

Die elektronische Kontrolleinheit umfasst vorzugsweise eine Umpolungseinheit zur Erzeugung oder Modulation des Synchronisationssignals, wobei die Umpolungseinheit insbesondere eine Umschalteinheit und einen Spannungsmodulator aufweist. Die Umschalteinheit weist insbesondere vier Schalter auf, die so angeordnet bzw. verschaltet sind, dass mit diesen Schaltern paarweise die Polarität der Versorgungsspannung an der ersten und zweiten Leitung umschaltbar ist, wobei die Umschalteinheit besonders bevorzugt als H-Brücke bzw. H-Schaltung ausgebildet ist.

Es ist bevorzugt, dass der Sensor zur Sicherstellung seiner Energieversorgung, unabhängig von der Polarität des Versorgungsspannungssignals bzw. des Synchronisationssignals, eine Gleichrichterschaltung, beispielsweise einen Brückengleichrichter, und einen Energiespeicher umfasst, wobei der Brückengleichrichter insbesondere an der ersten und zweiten Leitung angeschlossen ist.

Es ist zweckmäßig, dass der Sensor einen Polarisationsdetektor und einen Nulldurchgangsdetektor aufweist, welche so ausgelegt und angeordnet sind, dass sie eine Polarisationsänderung sowie einen Nulldurchgang des Versorgungsspannungssignals bzw. Synchronisationssignals zwischen erster und zweiter Leitung erfassen, wobei der Polarisationsdetektor und der Nulldurchgangsdetektor dafür insbesondere an die Gleichrichterschaltung angeschlossen sind. Der Sensor weist besonders bevorzugt einen Synchronisationspulsformer auf, der von dem Polarisationsdetektor und dem Nulldurchgangsdetektor angesteuert wird und der einen Protokolldekoder ansteuert, wobei der Synchronisationspulsformer so ausgebildet ist, dass er einen Synchronisationsimpuls erzeugt, welcher den Protokolldekoder dazu veranlasst, ein Datensignal umfassend ein oder mehrere Datenimpulse in definierter Weise zu erzeugen und/oder deren Übertragung an die ECU veranlasst.

Es ist bevorzugt, dass der Sensor einen Modeumschalter aufweist, welcher in Abhängigkeit der Signalform des Synchronisationssignals angesteuert wird, wobei die Signalform zumindest durch den Polarisationsdetektor und den Nulldurchgangsdetektor erfasst wird, wobei der Modeumschalter den Sensor dazu veranlasst, die von der elektronischen Kontrolleinheit angeforderten Informationen als Datensignal codiert an die elektronische Kontrolleinheit zu übertragen, wobei der Modeumschalter dafür insbesondere den Protokolldekoder ansteuert.

Die elektronische Kontrolleinheit ist vorzugsweise so ausgebildet, dass das Synchronisationssignal in Abhängigkeit der von der elektronischen Kontrolleinheit anzufordernden Informationen oder Informationsart in definierter Weise erzeugt wird, insbesondere hinsichtlich seiner Flankensteilheit, wobei die ECU besonders bevorzugt mit der Umpolungseinheit ein Synchronisationssignal mit rampenförmigen Flanken erzeugt und an den Sensor sendet, damit der Sensor Messdaten als Datensignal synchron zurücksendet, und/oder dass die ECU mit der Umpolungseinheit ein steilflankiges bzw. rechteckförmiges Synchronisationssignal an den Sensor sendet, damit der Sensor Statusdaten als Datensignal synchron an die ECU zurücksendet.

Die Erfindung bezieht sich außerdem auf die Verwendung der Sensoranordnung in Kraftfahrzeugen, wobei der Sensor insbesondere als Drucksensor oder Inertialsensor ausgebildet ist, besonders bevorzugt als Beschleunigungs- und/oder Körperschallsensor.

Es zeigen beispielhaft, in schematischer Darstellung
- Fig. 1: eine beispielhafte Sensoranordnung, umfassend einen Sensor, eine ECU sowie zwei Leitungen bzw. Verbindungsleitungen bzw. Versorgungsleitungen zwischen Sensor und ECU, wobei weitere Teileinheiten bzw. Komponenten des Sensors und der ECU veranschaulicht sind und eine synchronisierte Datenübertragung zwischen Sensor und ECU sowie eine Modebestimmung, durch Wechsel der Polarität der Versorgungsspannung als Synchronisationssignal dargestellt wird,
- Fig. 2: bis 4 verschiedene Datenübertragungsmodi jeweils durch ein Synchronisationssignal synchronisiert.

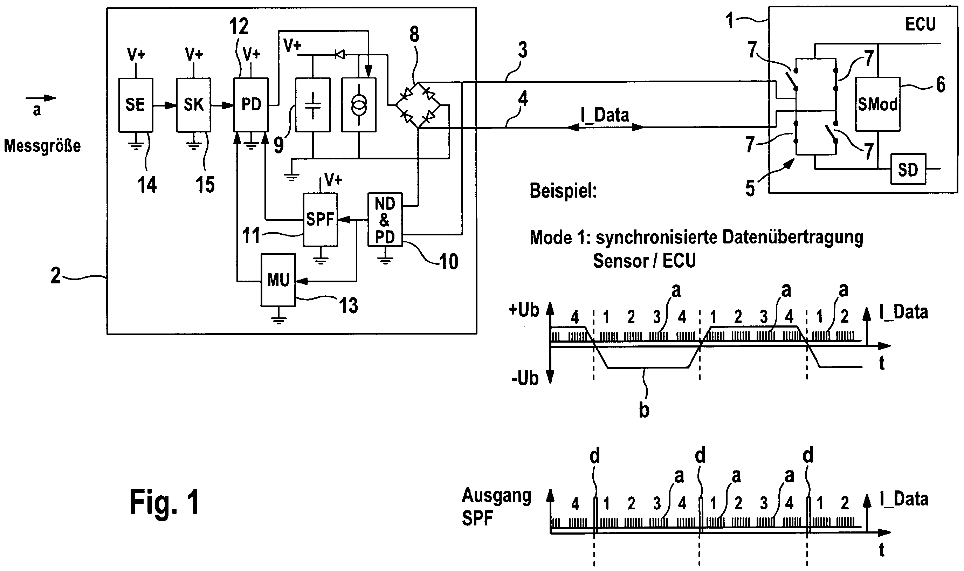

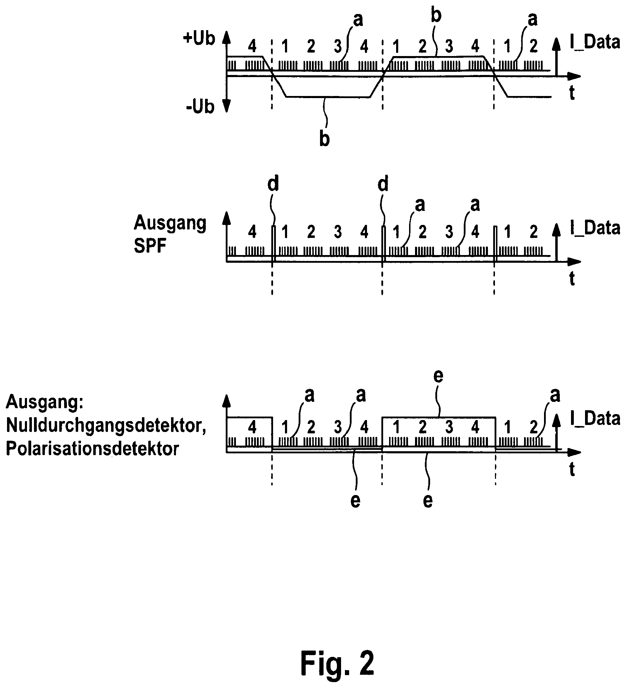

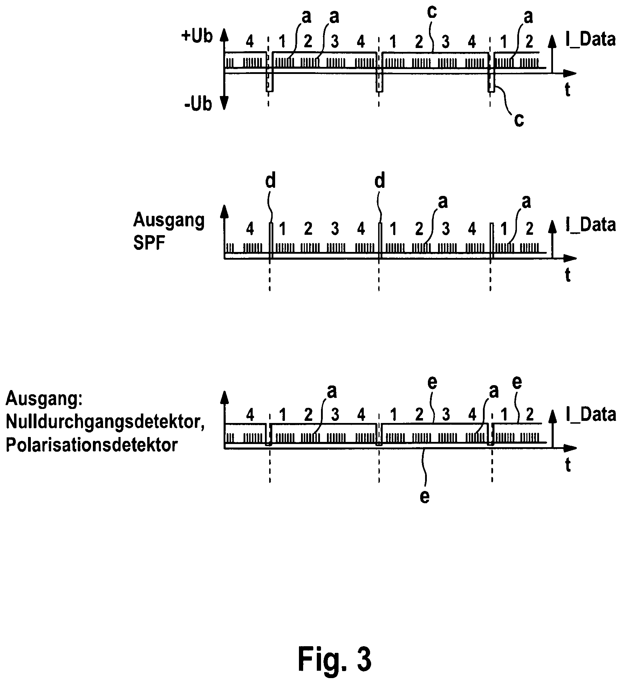

Anhand der in Fig. 1 veranschaulichten beispielhaften Sensoranordnung wird das Verfahren beispielhaft beschrieben. Die Sensoranordnung umfasst eine elektronische Kontrolleinheit ECU, 1 sowie einen Sensor 2, die lediglich durch eine erste und eine zweite Leitung 3, 4 miteinander verbunden sind. Sensor 2 weist ein Sensorelement 14 und eine Signalverarbeitungsschaltung 15 auf, welche einen Protokolldekoder 12 in Abhängigkeit der erfassten Messgröße, beispielhaft einer Beschleunigung, ansteuert. Die ECU fordert Informationen von Sensor 2 an und erzeugt als Anforderungs- und Synchronisationssignal in einer Umpolungseinheit ein definiertes Versorgungsspannungssignal mit wechselnder Polarität, das über die erste und zweite Leitung 3, 4 zum Sensor 2 übertragen wird. In Abhängigkeit der von der elektronischen Kontrolleinheit 1 anzufordernden Information bzw. Informationsart wird das Synchronisationssignal b durch Spannungsmodulator 6 und Umschalteinheit 5, umfassend vier Schalter 7, die so angeordnet sind, dass mit diesen Schaltern 7 paarweise die Polarität der Versorgungsspannung b an der ersten und zweiten Leitung 3, 4 umschaltbar ist, erzeugt. Dabei unterscheiden sich die so Synchronisationssignale beispielgemäß durch ihre Flankensteilheit. Ein Synchronisationssignal b mit rampenförmigen Flanken ist in Fig. 1 und 2 abgebildet und dient der Anforderung von Messdaten als Datensignal, welche der Sensor an die ECU senden soll. Fig. 3 zeigt dagegen ein Synchronisationssignal c anderen Typs mit steilen Flanken, das zur Anforderung von Statusdaten als Datensignal dient. Da das Synchronisationssignal b, c als Versorgungsspannungssignal zur Synchronisation eine wechselnde Polarität aufweist, umfasst Sensor 2 zur Sicherstellung seiner Energieversorgung einen Brückengleichrichter 8, verbunden mit erster und zweiter Leitung 3, 4 sowie einen Energiespeicher 9. Darüber hinaus weist der Sensor einen Polarisationsdetektor PD und Nulldurchgangsdetektor ND, gemeinsam Bezugszeichen 10 zugeordnet, auf der die Polarisationsänderungen bzw. Polarisation und den Nulldurchgang des Synchronisationssignals b erfasst. Daran jeweils angeschlossen weist der Sensor einen Synchronisationspulsformer 11 und einen Modeumschalter 13 auf. Der Synchronisationspulsformer 11 ist so ausgebildet, dass er einen Synchronisationsimpuls d erzeugt, welcher den Protokolldekoder 12 dazu veranlasst, ein Datensignal a umfassend ein oder mehrere Datenimpulse in definierter Weise zu erzeugen. Modeumschalter 13, welcher in Abhängigkeit der Signalform des Synchronisationssignals b, c angesteuert wird, wobei die Signalform zumindest durch den Polarisationsdetektor und den Nulldurchgangsdetektor 10 erfasst wird, veranlasst den Sensor dazu, die von der elektronischen Kontrolleinheit 1 angeforderten Informationen als Datensignal a codiert an die elektronische Kontrolleinheit 1 zu übertragen, wobei der Modeumschalter 13 dafür den Protokolldekoder 12 ansteuert. Der Modeumschalter 13 erkennt also den Betriebsmode bzw. welche Informationen die ECU anfordert und der Synchronisationspulsformer triggert das synchrone Senden des Sensors mittels seines Synchronisationsimpulses d. Die stromcodierten, impulsförmigen Datensignale a werden ECUseitig von Stromdetektor SD erfasst und von digitalen Stromsignalen in digitale Spannungssignale zur Weiterverarbeitung in der ECU gewandelt.

Beispielgemäß erfüllen folgende Funktionseinheiten aus Fig. 1 die folgenden Funktionen:
Brückengleichrichter: Der Brückengleichrichter sorgt dafür, dass das Sensorelement und die interne Signalverarbeitung immer mit der gleichen Spannungspolarität versorgt werden, d.h. er schützt die Sensorelektronik vor Verpolung.
Energiespeicher: Der Energiespeicher verhindert eine Unterbrechung der Spannungsversorgung der Sensorelektronik, während des Umpolvorgangs.
Nulldurchgang Detektor: Er detektiert während des Umpolvorgangs, den Nulldurchgang der Eingangsspannung bzw. des Synchronisationssignals.
Synchronisationspulsformer: Er generiert beim Detektieren des Nulldurchgangs von Plus nach Minus, bzw. von Minus nach Plus, einen Synchronisationspuls.
Polarisationsdetektor: Er erkennt, die Polarität der Eingansspannung bzw. des Synchronisationssignals und gibt diese an den Modeumschalter und dem Synchronisationspulsformer weiter.
Modeumschalter: Er bestimmt aus der Kombination von Synchronpulsabfolge und Polarität den Datenübertragungsmodus. Als Beispiele haben wir zurzeit folgende Modi vordefiniert, Modus 1/ Sensordatenausgabe bzw. Messdaten als Datensignal an die ECU, Modi 2 Auslesen von Statusdaten als Datensignal / Konfigurationsdaten / Fehlerspeicher aus dem Sensor an die ECU.
H-Brücke: Die H-Brücke dient der Erzeugung der Polaritätswechsel des Synchronisationssignals.
Stromdetektor: Der Stromdetektor wandelt das digitale Stromsignal gesendet vom Sensor in der ECU in digitale Spannungssignale um.
Spannungsmodulator: Der Strommodulator wandelt die zum Sensor zu schickenden Daten bzw. Datenanforderungssignale in das wenigstens eine Synchronisationssignal um bzw. erzeugt das Synchronisationssignal bezüglich seiner Signalform, beispielsweise Flankensteilheit.

In Fig. 2 sind das Synchronisationssignal b mit rampenförmigen Flanken als Anforderungs- und Versorgungssignal der ECU, das Ausgangssignal des Nulldurchgangsdetektors und Polarisationsdetektors e, der Synchronisationsimpuls d als Ausgangssignal des Synchronisationspulsformers sowie die Datensignale a, umfassend Messdaten, entsprechend einem ersten Datenübertragungsmodus, bestimmt durch das Synchronisationssignal b, veranschaulicht.

In Fig. 3 sind das Synchronisationssignal c mit steilen bzw. senkrechten Flanken als Anforderungs- und Versorgungssignal der ECU, das Ausgangssignal des Nulldurchgangsdetektors und Polarisationsdetektors e, der Synchronisationsimpuls d als Ausgangssignal des Synchronisationspulsformers sowie die Datensignale a, umfassend Statusdaten, entsprechend einem zweiten Datenübertragungsmodus, bestimmt durch das Synchronisationssignal c, veranschaulicht.

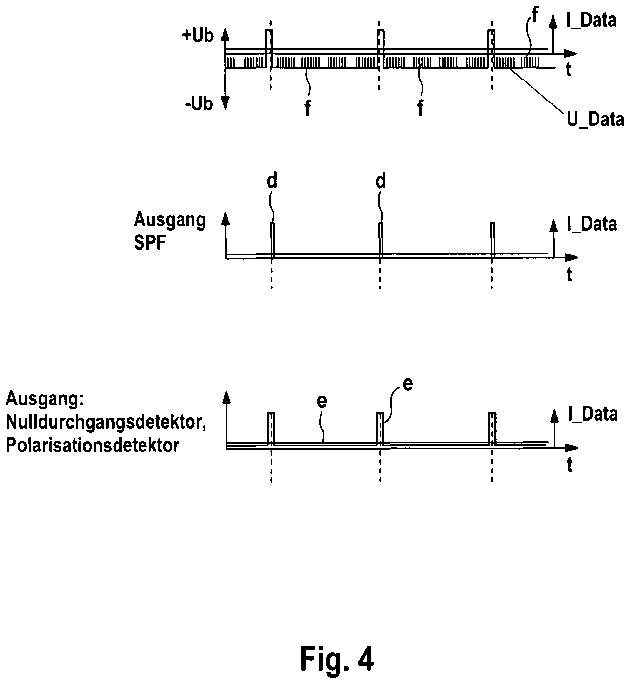

In Fig. 4 sind die Signale aus Fig. 2 und 3 für den dritten Datenübertragungsmodus dargestellt, bei dem allerding die elektronische Kontrolleinheit zumindest ein spannungscodiertes Datensignal f, U_Data nach einem Synchronisationssignal bzw. zwischen zwei Synchronisationssignalen an den Sensor überträgt. Dabei sind die Synchronisationssignale impulsförmig ausgebildet und wechseln wie die anderen Synchronisationssignale die Polarität der Spannung. Das Datensignal f, U_Data umfasst ebenfalls ein oder mehrere Spannungsimpulse, besonders bevorzugt geringerer Amplitude als das Synchronisationssignal, wobei diese Spannungsimpulse des Datensignals keine wechselnde Polarität aufweisen. Mittels solch eines spannungscodierten Datensignals überträgt die elektronische Kontrolleinheit beispielsweise Kalibrierdaten und/oder Statusbefehle an den Sensor. Dieses spannungscodierte Datensignal wird zweckmäßigerweise mittels des Spannungsmodulators in der elektronischen Kontrolleinheit erzeugt.

## Patentansprüche

1. Verfahren zur Synchronisation von Sensoren in einer Sensoranordnung, umfassend wenigstens eine elektronische Kontrolleinheit (1) und zumindest einen Sensor (2), die über eine erste (3) und eine zweite (4) Leitung mit einander verbunden sind, wobei der Sensor (2) über die erste und zweite Leitung mit elektrischer Energie versorgt wird und zusätzlich über die erste und zweite Leitung wenigstens ein Datensignal (a) vom Sensor (2) an die elektronische Kontrolleinheit (1) übertragen wird,
**dadurch gekennzeichnet, dass**
die elektronische Kontrolleinheit (1) ein definiertes Versorgungsspannungssignal mit wechselnder Polarität als Synchronisationssignal (b, c) an den Sensor (2) überträgt, woraufhin der Sensor nach einem Wechsel der Polarität des Synchronisationssignals wenigstens ein Datensignal (a) an die elektronische Kontrolleinheit überträgt.

2. Verfahren nach Anspruch 1, **dadurch gekennzeichnet, dass** das Datensignal (a) des Sensors (2) einen oder mehrere Impulse umfasst.

3. Verfahren nach Anspruch 1 oder 2, **dadurch gekennzeichnet, dass** das Datensignal (a) des Sensors (2) als eingeprägtes Stromsignal ausgebildet ist.

4. Verfahren nach Anspruch 1 oder 2, **dadurch gekennzeichnet, dass** die elektronische Kontrolleinheit (1) zumindest ein spannungscodiertes Datensignal (f) nach einem Synchronisationssignal an den Sensor (2) überträgt.

5. Verfahren nach mindestens einem der Ansprüche 1 bis 4, **dadurch gekennzeichnet, dass** der Sensor (2) durch genau zwei Leitungen (3, 4) mit der elektronischen Kontrolleinheit (1) verbunden ist.

6. Verfahren nach mindestens einem der Ansprüche 1 bis 5, **dadurch gekennzeichnet, dass** die elektronische Kontrolleinheit (1) eine Umpolungseinheit (5, 6) zur Erzeugung oder Modulation des Synchronisationssignals (b, c) umfasst, wobei die Umpolungseinheit insbesondere eine Umschalteinheit (5) und einen Spannungsmodulator (6) umfasst.

7. Verfahren nach Anspruch 6, **dadurch gekennzeichnet, dass** die Umschalteinheit (5) vier Schalter (7) aufweist, die so angeordnet sind, dass mit diesen Schaltern paarweise die Polarität der Versorgungsspannung (b, c) an der ersten und zweiten Leitung (3, 4) umschaltbar ist.

8. Verfahren nach mindestens einem der Ansprüche 1 bis 7, **dadurch gekennzeichnet, dass** der Sensor (2) zur Sicherstellung seiner Energieversorgung, unabhängig von der Polarität des Versorgungsspannungssignals (b, c), einen Brückengleichrichter (8) und einen Energiespeicher (9) umfasst.

9. Verfahren nach mindestens einem der Ansprüche 1 bis 8, **dadurch gekennzeichnet, dass** der Sensor einen Polarisationsdetektor (10) und einen Nulldurchgangsdetektor (10) aufweist, welche so ausgelegt und angeordnet sind, dass sie eine Polarisationsänderung sowie einen Nulldurchgang des Versorgungsspannungssignals (b, c) zwischen erster und zweiter Leitung (3, 4) erfassen.

10. Verfahren nach Anspruch 9, **dadurch gekennzeichnet, dass** der Sensor (2) einen Synchronisationspulsformer (11) aufweist, der von dem Polarisationsdetektor und dem Nulldurchgangsdetektor (10) angesteuert wird und der einen Protokolldekoder (12) ansteuert, wobei der Synchronisationspulsformer (11) so ausgebildet ist, dass er einen Synchronisationsimpuls (d) erzeugt, welcher den Protokolldekoder (12) dazu veranlasst, ein Datensignal (a) umfassend ein oder mehrere Datenimpulse in definierter Weise zu erzeugen.

11. Verfahren nach Anspruch 9 oder 10, **dadurch gekennzeichnet, dass** der Sensor (2) einen Modeumschalter (13) aufweist, welcher in Abhängigkeit der Signalform des Synchronisationssignals (b, c) angesteuert wird, wobei die Signalform zumindest durch den Polarisationsdetektor und den Nulldurchgangsdetektor (10) erfasst wird, wobei der Modeumschalter (13) den Sensor (2) dazu veranlasst, die von der elektronischen Kontrolleinheit (1) angeforderten Informationen als Datensignal (a) codiert an die elektronische Kontrolleinheit (1) zu übertragen, wobei der Modeumschalter (13) dafür insbesondere den Protokolldekoder (12) ansteuert.

12. Verfahren nach mindestens einem der Ansprüche 1 bis 11, **dadurch gekennzeichnet, dass** die elektronische Kontrolleinheit (1) so ausgebildet ist, dass das Synchronisationssignal (b, c) in Abhängigkeit der von der elektronischen Kontrolleinheit anzufordernden Informationen oder Informationsart in definierter Weise erzeugt wird, insbesondere hinsichtlich seiner Flankensteilheit.

13. Sensoranordnung umfassend wenigstens eine elektronische Kontrolleinheit (1) und zumindest einen Sensor (2), die über eine erste und eine zweite Leitung (3, 4) mit einander verbunden sind, wobei der Sensor über die erste und zweite Leitung mit elektrischer Energie versorgt wird und zusätzlich über die erste und zweite Leitung wenigstens ein Datensignal (a) vom Sensor (2) an die elektronische Kontrolleinheit (1) übertragen wird, **dadurch gekennzeichnet, dass**
die elektronische Kontrolleinheit und der Sensor so ausgebildet sind, dass sie das Verfahren nach mindestens einem der Ansprüche 1 bis 12 durchführen können.

14. Verwendung der Sensoranordnung nach Anspruch 13 in Kraftfahrzeugen, wobei der Sensor insbesondere als Drucksensor oder Inertialsensor ausgebildet ist.

## Claims

1. Method for synchronizing sensors in a sensor arrangement comprising at least one electronic control unit (1) and at least one sensor (2) which are connected to one another via a first line (3) and a second line (4), the sensor (2) being supplied with electrical energy via the first and second lines and at least one data signal (a) additionally being transmitted from the sensor (2) to the electronic control unit (1) via the first and second lines, **characterized in that**
the electronic control unit (1) transmits a defined supply voltage signal with alternating polarity to the sensor (2) as the synchronization signal (b, c), whereupon the sensor transmits at least one data signal (a) to the electronic control unit after the polarity of the synchronization signal has been changed.

2. Method according to Claim 1, **characterized in that** the data signal (a) from the sensor (2) comprises one or more pulses.

3. Method according to Claim 1 or 2, **characterized in that** the data signal (a) from the sensor (2) is in the form of an injected current signal.

4. Method according to Claim 1 or 2, **characterized in that** the electronic control unit (1) transmits at least one voltage-coded data signal (f) to the sensor (2) after a synchronization signal.

5. Method according to at least one of Claims 1 to 4, **characterized in that** the sensor (2) is connected to the electronic control unit (1) by exactly two lines (3, 4).

6. Method according to at least one of Claims 1 to 5, **characterized in that** the electronic control unit (1) comprises a polarity reversal unit (5, 6) for generating or modulating the synchronization signal (b, c), the polarity reversal unit comprising, in particular, a changeover unit (5) and a voltage modulator (6).

7. Method according to Claim 6, **characterized in that** the changeover unit (5) has four switches (7) which are arranged in such a manner that pairs of these switches can be used to change over the polarity of the supply voltage (b, c) on the first and second lines (3, 4).

8. Method according to at least one of Claims 1 to 7, **characterized in that** the sensor (2) comprises a bridge rectifier (8) and an energy store (9) in order to guarantee its energy supply independently of the polarity of the supply voltage signal (b, c).

9. Method according to at least one of Claims 1 to 8, **characterized in that** the sensor has a polarization detector (10) and a zero crossing detector (10) which are designed and arranged in such a manner that they detect a polarization change and a zero crossing of the supply voltage signal (b, c) between the first and second lines (3, 4).

10. Method according to Claim 9, **characterized in that** the sensor (2) has a synchronization pulse shaper (11) which is driven by the polarization detector and the zero crossing detector (10) and drives a protocol decoder (12), the synchronization pulse shaper (11) being designed in such a manner that it generates a synchronization pulse (d) which causes the protocol decoder (12) to generate a data signal (a) comprising one or more data pulses in a defined manner.

11. Method according to Claim 9 or 10, **characterized in that** the sensor (2) has a mode changeover switch (13) which is driven on the basis of the signal waveform of the synchronization signal (b, c), the signal waveform being detected at least by the polarization detector and the zero crossing detector (10), the mode changeover switch (13) causing the sensor (2) to transmit the information requested by the electronic control unit (1) to the electronic control unit (1) in a coded manner in the form of a data signal (a), the mode changeover switch (13) driving the protocol decoder (12), in particular, for this purpose.

12. Method according to at least one of Claims 1 to 11, **characterized in that** the electronic control unit (1) is designed in such a manner that the synchronization signal (b, c) is generated in a defined manner, in particular with regard to its edge steepness, on the basis of the information or type of information to be requested by the electronic control unit.

13. Sensor arrangement comprising at least one electronic control unit (1) and at least one sensor (2) which are connected to one another via a first line (3) and a second line (4), the sensor being supplied with electrical energy via the first and second lines and at least one data signal (a) additionally being transmitted from the sensor (2) to the electronic control unit (1) via the first and second lines, **characterized in that** the electronic control unit and the sensor are designed in such a manner that they can carry out the method according to at least one of Claims 1 to 12.

14. Use of the sensor arrangement according to Claim 13 in motor vehicles, the sensor being in the form of, in particular, a pressure sensor or an inertial sensor.

## Revendications

1. Procédé de synchronisation de capteurs dans un système de détection, comprenant au moins une unité de commande électronique (1) et au moins un capteur (2) reliés entre eux par des première (3) et seconde (4) lignes, dans lequel le capteur (2) est alimenté en énergie électrique par l'intermédiaire des première et seconde lignes et au moins un signal de données (a) est en outre transmis du capteur (2) à l'unité de commande électronique (1) par l'intermédiaire des première et seconde lignes,
**caractérisé en ce que** l'unité de commande électronique (1) transmet au capteur (2) un signal de tension d'alimentation défini à polarité variable en tant que signal de synchronisation (b, c), après quoi le capteur transmet au moins un signal de données (a) à l'unité de commande électronique après un changement de la polarité du signal de synchronisation.

2. Procédé selon la revendication 1, **caractérisé en ce que** le signal de données (a) du capteur (2) comprend une ou plusieurs impulsions.

3. Procédé selon la revendication 1 ou 2, **caractérisé en ce que** le signal de données (a) du capteur (2) est conçu sous la forme d'un signal de courant appliqué.

4. Procédé selon la revendication 1 ou 2, **caractérisé en ce que** l'unité de commande électronique (1) transmet au moins un signal de données (f) codé en tension au capteur (2) après un signal de synchronisation.

5. Procédé selon au moins l'une des revendications 1 à 4, **caractérisé en ce que** le capteur (2) est relié à l'unité de commande électronique (1) par exactement deux lignes (3, 4).

6. Procédé selon au moins l'une des revendications 1 à 5, **caractérisé en ce que** l'unité de commande électronique (1) comprend une unité d'inversion de polarité (5, 6) destinée à générer ou moduler le signal de synchronisation (b, c), dans lequel l'unité d'inversion de polarité comprend en particulier une unité de basculement (5) et un modulateur de tension (6).

7. Procédé selon la revendication 6, **caractérisé en ce que** l'unité de basculement (5) comporte quatre commutateurs (7) qui sont disposés de manière à ce que la polarité de la tension d'alimentation (b, c) des première et seconde lignes (3, 4) puisse être amenée à basculer par paires au moyen desdits commutateurs.

8. Procédé selon au moins l'une des revendications 1 à 7, **caractérisé en ce que** le capteur (2) comprend un redresseur en pont (8) et un accumulateur d'énergie (9) pour assurer son alimentation en énergie, indépendamment de la polarité du signal de tension d'alimentation (b, c).

9. Procédé selon au moins l'une des revendications 1 à 8, **caractérisé en ce que** le capteur comprend un détecteur de polarisation (10) et un détecteur de passage à zéro (10) qui sont conçus et configurés pour détecter un changement de polarisation et un passage à zéro du signal de tension d'alimentation (b, c) entre des première et seconde lignes (3, 4).

10. Procédé selon la revendication 9, **caractérisé en ce que** le capteur (2) comporte un conformateur d'impulsions de synchronisation (11) qui est commandé par le détecteur de polarisation et le détecteur de passage à zéro (10) et qui commande un décodeur de protocole (12), dans lequel le conformateur d'impulsions de synchronisation (11) est conçu pour générer une impulsion de synchronisation (d) qui amène le décodeur de protocole (12) à générer de manière définie un signal de données (a) comprenant une ou plusieurs impulsions de données.

11. Procédé selon la revendication 9 ou 10, **caractérisé en ce que** le capteur (2) comporte un sélecteur de mode (13) qui est commandé en fonction de la forme de signal du signal de synchronisation (b, c), dans lequel la forme de signal est détectée au moins par le détecteur de polarisation et le détecteur de passage à zéro (10), dans lequel le sélecteur de mode (13) amène le capteur (2) à transmettre de manière codée à l'unité de commande électronique (1) les informations demandées par l'unité de commande électronique (1) en tant que signal de données (a), dans lequel le sélecteur de mode (13) commande en particulier à cet effet le décodeur de protocole (12).

12. Procédé selon au moins l'une des revendications 1 à 11, **caractérisé en ce que** l'unité de commande électronique (1) est conçue pour que le signal de synchronisation (b, c) soit généré de manière définie en fonction des informations devant être demandées par l'unité de commande électronique ou du type d'informations, notamment en ce qui concerne la pente des fronts.

13. Système de détection comprenant au moins une unité de commande électronique (1) et au moins un capteur (2) qui sont reliés entre eux par l'intermédiaire de première et seconde lignes (3, 4), dans lequel le capteur est alimenté en énergie électrique par l'intermédiaire des première et seconde lignes et au moins un signal de données (a) est en outre transmis du capteur (2) à l'unité de commande électronique (1) par l'intermédiaire des première et seconde lignes,
**caractérisé en ce que** l'unité de commande électronique et le capteur sont conçus pour mettre en oeuvre le procédé selon au moins l'une des revendications 1 à 12.

14. Utilisation du système de détection selon la revendication 13 dans des véhicules à moteur, dans lequel le capteur est notamment réalisé sous la forme d'un capteur de pression ou d'un capteur inertiel.
